# EUROPEAN PATENT APPLICATION

(11) **EP 4 852 345 A1**
(43) Date of publication of application: **09.12.2026**
(21) Application number: 25180798.8
(22) Date of filing: 04.06.2025
(51) Int. Cl.: H04B 10/112, H04B 10/70

(54) **OPTICAL TERMINAL, OPTICAL SYSTEM AND METHOD FOR FREE-SPACE OPTICAL COMMUNICATION**

(71) Applicant: Airbus S.A.S., 31700 Blagnac (FR)
(72) Inventor: Comin, Alberto, 82024 Taufkirchen (DE)
(74) Representative: OTN Airbus SAS

(57) **Abstract**

The present invention provides an optical terminal (1, 1a, 1b) for free-space optical communication, comprising a transmitting channel (2) comprising a light source (21) for emitting a first light beam (B1), and a first spatial light modulator (22) for spatially modulating the first light beam (B1) by a predetermined first spatial pattern; and a receiving channel (3) comprising a second spatial light modulator (31) for spatially demodulating a received second light beam (B2) by a predetermined second spatial pattern, and a detector (32) for detecting a spatial mode (M4) of the spatially demodulated second light beam (B2); and a controller (4) configured to determine a updated spatial pattern based on the spatial mode (M4) of the second light beam (B2) and the second spatial pattern, and apply the updated spatial pattern to the first and second spatial light modulators (22, 31).. Further, the present invention provides a corresponding optical system and method for free-space optical communication.

## Description

### TECHNICAL FIELD OF THE INVENTION

The invention relates to an optical terminal, an optical system as well as to a method for free-space optical communication.

### TECHNICAL BACKGROUND

It is known that atmospheric turbulence distorts the wavefront of optical beams. This applies to beams in classical free-space optical communications as well as those used for quantum communication such as Quantum key Distribution, QKD. The distortions to the wavefront of the optical beam can cause significant link losses at the receiver. These distortions cause even more severe problems in quantum communications using QKD than for classic optical communications, because it is not possible to amplify quantum signals and so QKD free space setups require larger telescopes due to the fewer optical power. However, when the diameter of the telescope becomes larger than the coherence length of the wavefront, also known as Fried parameter, the telescope cannot efficiently focus the received light anymore. Furthermore, for classic optical communications, it is possible to sample a part or portion of the received optical beam in order to measure the wavefront, for example using a Shack-Hartmann wavefront sensor, and then correct the wavefront according to the measured wavefront using a deformable mirror or the like.

Therefore, correcting the wavefront of the QKD signal is very challenging because on the one hand side, it is impossible to clone the single photons which are used to encode the quantum key. On the other hand side, the single photons would not have enough intensity to be measured with conventional wavefront correction techniques. Efforts to measure the wavefront of single photons are complex and not yet mature at the time of filing.

As a consequence, current solutions for correcting the wavefront distortion rely on adaptive optics. For quantum key distribution this implies using a second, more powerful optical beam to measure the wavefront error and then apply the same correction also to the quantum beam. Although there are some theoretical approaches to use Bessel beams, Airy beams, pin beams or other free space modes to increase the resilience with respect to atmospheric turbulence, it is not clear if this approach will actually work for larger link distances. Furthermore, it has been examined that some types of beams are theoretically able to self-heal after a small obstacle, however, it is unclear as well, if this can be applied to a realistic communication link in the atmosphere.

The publication Klug et al. "Robust structured light in atmospheric turbulences" Advanced Photonics, Vol. 5, Issue 1, 016006 (February 2023) describes the use of a spatial mode, which is the eigenvalue of the atmospheric channel, in such a way that it would propagate without diffracting. It is suggested to apply this method to quantum tomography, which is however a relatively slow process.

In this invention, the present invention is directed to improve the means for compensation of distortions caused by the turbulent atmosphere.

### SUMMARY OF THE INVENTION

According to the invention, this problem is solved in each case by the subject matters of the independent claims.

According to a first aspect of the invention, an optical terminal for free-space optical communication is provided. The optical terminal comprises a transmitting channel comprising a light source for emitting a first light beam, and a first spatial light modulator for spatially modulating the first light beam by a predetermined first spatial pattern; and a receiving channel comprising a second spatial light modulator for spatially demodulating a received second light beam by a predetermined second spatial pattern, and a detector for detecting a spatial mode of the spatially demodulated second light beam; and a controller configured to determine a updated spatial pattern based on the spatial mode of the second light beam and the second spatial pattern, and apply the updated spatial pattern to the first and second spatial light modulators.

According to a second aspect of the invention, an optical system for free-space optical communication is provided. The optical system comprises a first inventive optical terminal as a first communication terminal, and a second inventive optical terminal as a second communication terminal, wherein the receiving channel of the second optical terminal is configured to receive the emitted first light beam from the first optical terminal, spatially demodulate the first light beam with a predetermined second spatial pattern applied to the second spatial light modulator of the second optical terminal, and detect a first spatial mode by the detector of the second optical terminal, wherein the controller of the second optical terminal is configured to determine an updated spatial pattern corresponding to an eigenmode of a turbulent channel between the first and second optical terminal based on the detected spatial mode of the first light beam and the second spatial pattern, and apply the updated spatial pattern to the first and second spatial light modulator of the second optical terminal.

According to a third aspect of the invention, a method for free-space optical communication is provided. The method for free-space optical communication comprises emitting, by a light source of a first optical terminal, a first light beam, spatially modulating, by a first spatial light modulator of the first optical terminal, the first light beam with a predetermined first spatial pattern, transmitting the first light beam through a turbulent channel towards a second optical terminal, spatially demodulating, by a second spatial light modulator of the second optical terminal, the first light beam by applying a predetermined second spatial pattern, detecting, by a detector, a spatial mode of the first light beam, determining a updated spatial pattern based on the detected spatial mode and the second spatial pattern, and applying, by a first spatial light modulator of the second optical terminal, the updated spatial pattern to a second light beam emitted by a light source of the second optical terminal.

A fundamental idea of the invention is to provide a way to solve the eigenvalue problem numerically for the optical turbulent channel, which changes on the kilohertz scale, fast and continuously. The invention provides a method and a corresponding optical terminal that exploits the eigenmodes of the atmospheric channel to optimize a free space quantum and classical optical communication link.

A fundamental concept of the present invention is the physical implementation and the method for iteratively estimating the eigenmodes, which is also applicable to quantum communication. This is done by leveraging a communication link, and the fact that when the link latency is smaller than the turbulence coherence time, the forward and backward optical channels through the turbulence are effectively symmetrical. By iteration of sending intended distorted beams modulated by predetermined or calculated spatial patterns, it is possible to approach the eigenmode of the atmospheric optical channel, so that demodulation at the receiver terminal leads to an optical beam with a clean wavefront.

The advantage with respect to the prior art reference above is that we do not need to perform a complete tomography of the optical channel. This simplifies the process and make it more feasible, since it is necessary for the whole process to be faster than the coherence time of the atmospheric channel, which is typically about 1 to 10 milliseconds. The fast processing is provided by the controller, which may be configured as a field programmable gate arry, FPGA, and/or an application-specific integrated circuit, ASIC, which provide high process speed.

The invention thus improves on the approach of the prior art, which was applied to tomography, and provides an iterative and fast way to constantly estimate the spatial eigenmodes of the atmospheric channel. With respect adaptive optics, the present invention provides a simpler and more efficient method to clean a beam from wavefront distortions. In particular, adaptive optics can only correct the wavefront in the region where the local intensity is sufficiently high, which is not a limitation using the present approach. With respect to using Bessel beams or another ad hoc spatial beam shape, the current approach is more general, and potentially more efficient, because it automatically finds the best mode for the specific communication channel. With respect to the approach of determining the eigenmodes applied quantum tomography, the present approach is more practical, because it provides a shorter and simpler process.

A spatial pattern is understood to contain information about amplitude and/or phase modulation distributions of the wavefront of the beamwhich are applied to the optical beam by the spatial light modulators The spatial patterns typically are pixel-based so that elements, such as liquid crystal cells for an LCD-based spatial light modulator, micro-mirrors, optical nano-antenna phased array elements or others, can be addressed accordingly. A light beam having a clean wavefront propagating through the spatial light modulator, is then modulated according to the applied light pattern. Each of the spatial light modulators in the present invention can be configured as a reflective type or a transmissive type or a combination of these two.

The light source typically is a narrow line width laser, such as an DFB-laser diode, and preferably outputs as single, i.e. Gaussian spatial mode, although the invention is not limited to this. Furthermore, the detector is configured to detect an optical spatial mode of the received second light beam. This can be done by measuring the amplitude distribution and/or the phase distribution of the received light beam. The controller is then configured to calculate a spatial pattern applied to or imprinted into the spatial light modulators by solving the eigenmode problem of the turbulent channel using the available data, i.e. the detected spatial mode of the received beam and the applied pattern. In some embodiments, as also described further below, if available, data about the applied spatial pattern of the received beam before arriving at the optical terminal can be used as well to determine the updated spatial pattern.

However, at the beginning of the process, an initial first and second spatial pattern is applied to the spatial light modulators. Such an initial spatial pattern may be, for example, one of the Laguerre-Gaussian modes. After some iterations, when enough informationhave been acquired, the updated spatial pattern then corresponds to the eigenmode of the turbulent channel between the first and second communication terminals.

Advantageous embodiments and improvements of the present invention are found in the subordinate claims.

According to some aspects according to the invention, the detector comprises a camera configured to detect an intensity distribution of the second light beam. In this way, the intensity distribution of the second light beam can be obtained with a higher frequency, e.g. higher than 10 kHz, than typical changes of the wavefront in turbulent channels. As described above, the controller may be configured to determine the spatial mode at this processing frequency, thus enabling fast adaptation to changes of the turbulent channel.

According to some aspects according to the invention, the detector comprises a wavefront sensor configured to detect an amplitude distribution and a phase distribution of the second light beam. In this way, data processing is reduced since with the obtained wavefront the spatial mode of the second beam can be obtained directly.

According to some aspects according to the invention, the controller is configured to determine an eigenvalue of a turbulent channel between the optical terminal and a second optical terminal transmitting the second light beam based on the first and second spatial pattern and the detected spatial mode of the spatially demodulated second light beam. This ensures receiving a light beam with clean spatial mode at the receiving channel so that no losses due to the turbulent channel are occuring.

According to some aspects according to the invention, the transmitting channel comprises a modulator for modulating the first light beam such as to contain data about the first spatial pattern. This type of modulation refers to a classical modulation scheme, such as e.g. ON/Off-Keying, FWM, FPSK, QPSK and others, which can be applied e.g. using phase shifters and other common optical elements. In this way, a receiver optical terminal can use these data to determine the wavefront distortions by the turbulence and thus finding more quickly and precisely the eigenmodes of the turbulant channel.

According to some aspects according to the invention, the receiving channel further comprises a photodetector for receiving the second light beam, wherein the controller is configured to demodulate an electric signal of the photodetector to obtain data about a third spatial pattern applied to the second light beam, and determine the updated spatial pattern based on the spatial mode of the second light beam, the second spatial pattern, and the third spatial pattern. In this way, the controller of the optical terminal can use the data about the third spatial pattern to determine the wavefront distortions by the turbulence and thus finding more quickly and precisely the eigenmodes of the turbulant channel.

According to some aspects according to the invention, the transmitting channel further comprises a single photon source for emitting a quantum beam for quantum communication. This enables the optical terminal to transmit data by secure QKD or quantum communication.

According to some aspects according to the invention, a difference of a wavelength of the first light beam and the wavelength of the quantum beam is between 0.5 nm and 3 nm, preferably 0.7 nm and 2 nm, the transmitting channel further comprising a beam combiner for combining the first light beam and the quantum beam. Due to the close wavelength, the refractive index of the turbulences are essentially the same, thus causing similar wavefront distortions to the light beam and the quantum beam. Alternatively, the light beam and the quantum beam may be polarized with a different polarization, preferably orthogonal polarization states, such as e.g. left-hand circular and right-hand circular polarization.

According to some aspects according to the invention, the receiving channel further comprises a single photon counter for receiving a quantum beam, and a beam splitter for separating the second light beam and the quantum beam. In this way, the optical terminal can function as a receiver to receive a secure QKD or quantum beam. Such a receiver is applicable to any encoding scheme applied to the quantum beam.

According to some aspects according to the invention, the beam splitter comprises a dense wavelength division multiplexing, DWDM, filter or a polarization beam splitter. These represent optical components for two of the most suitable modulation schemes. The DWDM filter enables the use of a plurality of pairs of different channels for the light beam and/or the quantum beam mutually having a small spectral spacing in their wavelength, such as e.g. less than 2 nm. In case of the application of the circular polarized light, waveplates have to be used to separate the different circular polarization states.

According to some aspects according to the invention, further comprising an aperture arranged in the transmitting channel and the receiving channel. The aperture may comprise a telescope arranged in both the receiver and transmitting channels so that transmitted light and received light may propagate through the same turbulent channel. A separation element or separator, such as a beam splitter, e.g. a dichroic mirror, is required to direct the first light beam through the aperture towards a receiver terminal and to guide the second light beam towards the detector. In this way, since the communication channel between the two optical terminals is identical, a precise determination of the eigenmmode is possible.

According to some aspects according to the invention, further comprising a first aperture arranged in the transmitting channel and a second aperture arranged in the receiving channel and spaced apart from the transmitting channel by a predetermined distance. This renders the aformentioned separation element redundant or at least relaxes its constraints.

According to some aspects according to the invention, the first spatial light modulator is configured as a photonic phased array comprising a plurality of optical antenna elements. Preferrably, the photonic phased array is arranged on a first photonic chip of the transmitting channel. The photonic phased array may also function as the final aperture of the optical terminal for transmitting the first light beam and receiving the second light beam to/from the turbulent channel. This antenna type is particularly suitable for installation onto an aircraft. Installed on the aircraft, the photonic phased array antennta does not protude outside of the fuselage and thus does not affect an aerodynamic profile ot the aircraft.

According to some aspects according to the invention, the second spatial light modulator is configured as a phase-sensitive photonic phased array comprising a plurality of optical antenna elements. Preferrably, the phase-sensitive photonic phased array is in arranged on a second photonic chip of the receiving channel. In this way, the optical antenna already obtains the phase information of the wavfront of the second light beam, which is helpful for further processing by the controller. The phased-sensitive photonic phased array may also function as the receiving aperture of the second light beam from the turbulent channel. This antenna type as well is particularly suitable for installation onto an aircraft. Installed on the aircraft, the phase-sensitive photonic phased array antennta does not protude outside of the fuselage and thus does not affect an aerodynamic profile ot the aircraft.

The above embodiments and further developments can be combined with each other as desired, if useful. In particular, all features of the optical terminal for free space optical communication are transferable to the optical system for free space optical communication and the method for free space optical communication, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

Advantageous embodiments and further developments emerge from the description with reference to the figures.

### BRIEF SUMMARY OF THE DRAWINGS

The present invention is explained more specifically below on the basis of the exemplary embodiments indicated in the schematic figures, in which:
- Fig. 1: shows a schematic illustration of an optical terminal according to an embodiment of the invention;
- Fig. 2: shows a schematic illustration of an optical system including optical terminals according to an embodiment of the invention;
- Fig. 3: shows a schematic illustration of an optical system including optical terminals according to a further embodiment of the invention;
- Fig. 4: shows a schematic illustration of an optical system including optical terminals according to a further embodiment of the invention;
- Fig. 5: shows a schematic illustration of an optical system including optical terminals according to a further embodiment of the invention;
- Fig. 6: shows a schematic illustration of an optical system including optical terminals according to a further embodiment of the invention; and
- Fig. 7: shows a flow chart for a method for quantum communication according to an embodiment of the invention.

In the figures of the drawing, elements, features and components which are identical, functionally identical and of identical action are denoted in each case by the same reference designations unless stated otherwise.

### DESCRIPTION OF EXEMPLARY EMBODIMENTS

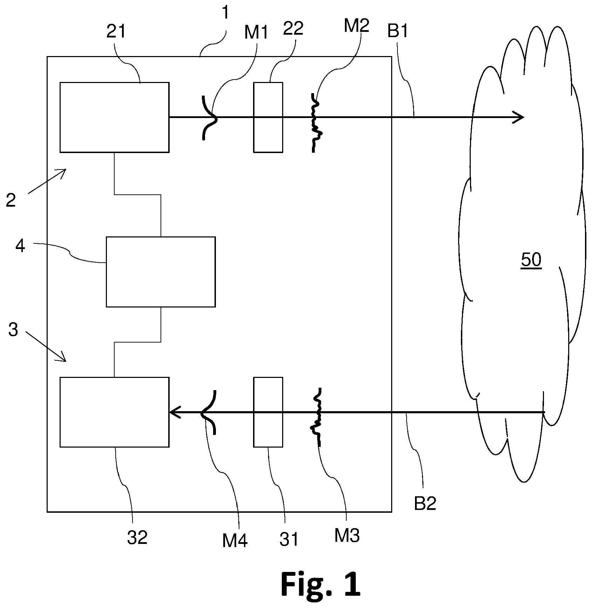

Fig. 1 shows a schematic illustration of an optical terminal 1 according to an embodiment of the invention.

The optical terminal 1 for free-space optical communication shown in Fig. 1 comprises a transmitting channel 2. The transmitting channel 2 comprises a light source 21 for emitting a first light beam B1. The light source 21 preferably is a laser source configured to emit a monochromatic light beam with narrow linewidth, preferably smaller than 1 nm, such as e.g. a DFB laser diode, however, not limited to these. Other types of light source 21 are also applicable, such as e.g. broad band LEDs. The wavelength of the first light beam B1 preferably is in a typical communication band around 1550 nm, however, not limited to this band. In particular, a wavelength around 850 nm, 980 nm, 1300 nm, 2000nm may be used as well. The first light beam B1 is emitted by the light source 21 in a first aptial mode M1, which, although not limited to this, is a single spatial Gaussian Mode having an M² of about 1 and being approximately diffraction limited in the present embodiment.

The transmitting light channel 2 further comprises a first spatial light modulator 22 for spatially modulating the first light beam B1 by a predetermined first spatial pattern. The first spatial pattern contains information about a spatial amplitude modulation, i.e. attenuation, and/or phase modulation, i.e. phase shift, distribution. The spatial pattern is thus applied to the first spatial light modular 22, which preferably comprises picture elements that are modified according to the first spatial pattern. The first light beam B1 having a clean wavefront propagating through the first spatial light modulator 22 is then spatially modulated according to the applied first light pattern. The initial clean first spatial mode M1 is thereby converted to a second spatial mode M2.

The first spatial light modulator 22, and any further light modulators as described further below may be any kind of suitable optical devices able to spatially modulate the light beam. The first spatial light modulator 22 may be for example an LCD-based spatial light modulator comprising liquid crystal cells as picture element, a MEMS device comprising micro-mirrors, optical nano-antenna phased array elements or other suitable device. Although shown as a transmissive type spatial light modulator, the first spatial light modulators 22, as well as further spatial light modulators 22, 31 mentioned below, can be configured as a reflective type or a combination of a transmissive type and a reflective type.

The so spatially modulated first beam B1 having the spatial mode M2 is then transmitted towards a receiver not shown in Fig. 1, through a communication channel, which may involve refractive index changes due to turbulences.

The optical terminal 1 further comprises a receiving channel 3 for receiving a second light beam B2. The receiving channel 3 comprises a second spatial light modulator 31 for spatially demodulating the received second light beam B2 by a predetermined second spatial pattern. Initially, the predetermined second light pattern may be one of a Laguerre Gaussian Mode. The incoming second light beam B2 having a third spatial mode M3 is thereby spatially demodulated to have a fourth spatial mode M4, which initially may not be a clean Gaussian mode. After some iterations, if final state the eigenmode of the turbulent channel 50 is obtained, the fourth mode M4 may be clean, having an M² of about 1 and being approximately diffraction limited.

The receiving channel 3 further comprises a detector 32 for detecting a spatial mode M4 of the spatially demodulated second light beam B2. In some embodiments, the detector 32 comprises a camera configured to detect an intensity distribution of the second light beam B2. A camera may invlove fast image processing. In further embodiments, the detector 32 comprises a wavefront sensor configured to detect an amplitude distribution and a phase distribution of the second light beam B2. This may reduce the amount of measured modes for solving the eigenvalue problem numerically.

The optical terminal 1 further comprises a controller 4. The controller 4 can be a programmable computer or chip, such as a field programmable gate array, FPGA, and/or an application-specific integrated circuit, ASIC. The controller 4 is configured to determine an updated spatial pattern based on the fourth spatial mode M4 of the second light beam B2 and the second spatial pattern, which has been applied to the second spatial light modulator 31. The controller 4 is configured to apply the determined updated spatial pattern to the first spatial light modulator 22, so that the first light beam B1 is spatially modulated according to the updated spatial pattern. In this way, the fourth second mode M4 of the first light beam B1 approaches the eigenmode of the turbulent channel 50. The controller 4 is also configured to apply the determined updated spatial pattern to the second spatial light modulator 31. In this way, a cleaner fourth spatial mode M4 of the second light beam B2 can be expected.

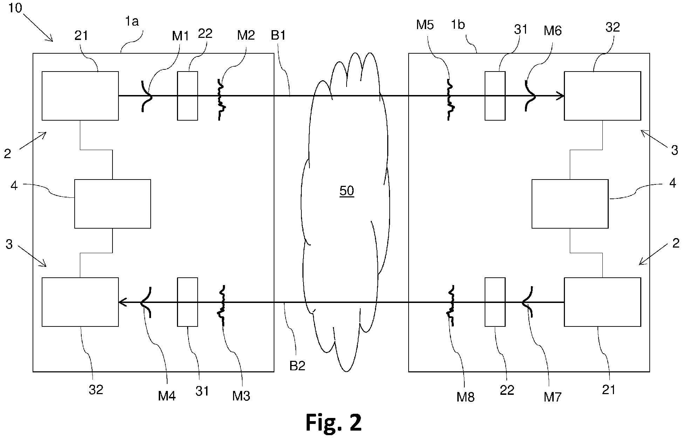

Fig. 2 shows a schematic illustration of an optical system 10 including optical terminals 1a, 1b according to an embodiment of the invention.

The optical system 10 for free-space optical communication comprises a first optical terminal 1a as a first communication terminal, and a second optical terminal 1b a second communication terminal. The first and second optical terminals 1a, 1b are based and in the present embodiment identical to the optical terminal 1 described above with reference to Fig. 1.

In this embodiment of the optical system 10, the receiving channel 3 of the second optical terminal 1b is configured to receive the emitted first light beam B1 from the first optical terminal 1a. The first light beam B1 has been propagated through the turbulent channel 50, therby converting the second spatial mode M2 to a fifth spatial mode M5. After some iterations, the second spatial mode M2 becomes the eigenmode of the turbulent channel 50 so that the second and fifth spatial modes M2, M5 are identical. This situation is shown in Fig. 2.

The first light beam B1 is spatially demodulated by a predetermined second spatial pattern applied to the second spatial light modulator 31 of the second optical terminal 1b, thereby converting the fifth spatial mode M5 to a sixth spatial mode. After some iterations, the sixth spatial mode M6 is a clean spatial mode, an M² of about 1 and being approximately diffraction limited. Then, a detector 32 of the second optical terminal 1b detects at least the intensity and/or phase distribution of the second first light beam B1.

The controller 4 of the second optical terminal 1b is configured to determine an updated spatial pattern based on the detected spatial mode M2 of the first light beam B1 and the second spatial pattern. After some iterations, the updated spatial pattern approached and eventually corresponds to an eigenmode of a turbulent channel 50 between the first and second optical terminal 1a, 1b.

A light source 21 of the second optical terminal 1b is configured to emit the second light beam B2 having a seventh mode M7, which, as well, preferably is a clean spatial mode, an M² of about 1 and being approximately diffraction limited. The controller 4 of the second optical terminal 1b is also configured to apply the updated spatial pattern to the first spatial light modulator 22 of the transmitting channel 2 of the second optical terminal 1b in order to approach the eigenmode of the turbulent channel 50. The so modulated second beam B2 having an eight mode M8 is then transmitted towards the first optical terminal 1a through the turbulent channel 50 again. The controller 4 of the second optical terminal 1b is also configured to apply the updated spatial pattern to the first spatial light modulator 22 of the transmitting channel 2 of the second optical terminal 1b in order to approach the eigenmode of the turbulent channel 50.

The controller 4 of the first optical terminal 1a is thus configured to determine an eigenvalue of a turbulent channel 50 between the first optical terminal 1a and a second optical terminal 1b transmitting the second light beam B2 based on the first and second spatial pattern and the detected fourth spatial mode M4 of the spatially demodulated second light beam B2. Similar applies to the controller of the second optical terminal 1b with respect to the received first light beam B1.

At the beginning of the communication link established between the two communication terminals, immediately after the line of sight between the first and second optical terminals 1a, 1b has been acquired, eigenmodes of the atmospheric turbulent channel 50 are unknown, and the spatial light modulator 22 is used to imprint a predefined first spatial pattern, such as e.g. one of the Laguerre-Gaussian modes. After enough information has been acquired about the atmospheric channel due to the analyzation of the received second light beam, the first spatial light modulator 22 of both first and second optical terminals 1a, 1b are used to apply or imprint a beam profile or spatial pattern to the spatial light modulators 22, 31 that approximates an eigenmode of the turbulent channel 50. In this way, the spatially modulated beams M2, M3, M5, M8 carry the eigenmode of the turbulent channel 50 being invariant to the turbulences and can be spatially demodulated to receive a clean spatial mode M4, M6 at the receiving channel, thereby causing no losses due to refractive index changes in the turbulent channel 50.

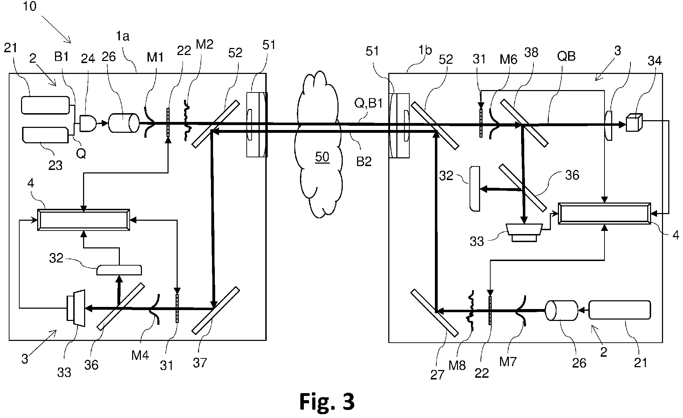

Fig. 3 shows a schematic illustration of an optical system 10 including optical terminals 1a, 1b according to a further embodiment of the invention.

The embodiment of the optical system 10 shown in Fig. 3 is based on and compatible with the emodiments of the optical system 10 described with reference to Fig. 2 and it may include any of the the optical terminals 1, 1a, 1b as described before.

In the present embodiment, the transmitting channel 2 of both optical terminals 1a, 1b comprises a modulator (not shown) for modulating the respective light beams B1, B2 such as to contain data about the spatial pattern applied to the first spatial light modulator. This type of modulation refers to a classical modulation scheme, such as e.g. ON/Off-Keying, FWM, FPSK, QPSK and others, which can be applied e.g. using phase shifters and other common optical elements. The modulator may thus be any suitable kind of modulator for modulating the first light beam. In particular, it may be an electronic modulator for directly modulating the light source with a modulated current, or it may be an optical modulator, such as a Pockels cell for modulating the first light beam by passing through the modulator.The light beams B1, B2 thus contains data about the applied first or updated spatial pattern applied to spatial light modulator 22.

Furthermore, in the receiving channel of both optical terminals 1a, 1b, non-polarizing beam splitters 36 separate the light beams B1, B2 to direct a portion of the light beams B1, B2 to the detector 32, which can be a camera or a wavefront sensor, and another portion onto a photodetector 33. In both optical terminals 1a, 1b, the controller 4 is configured to demodulate an electric signal received from the photodetector 33 to obtain the data about the spatial pattern applied to the respective light beams B1, B2 by the respective first spatial light modulators 31. In this way, the optical terminals 1a, 1b share information about the respective first spatial patterns applied to the transmitted light beams B1, B2.

The controller 4 of the first optical terminal 1a determines the updated spatial pattern based on the fourth spatial mode M4 of the second light beam B2, the second spatial pattern, and the third spatial pattern received by the data stream in the modulated second light beam B2 and applies the updated spatial pattern to the first and the second spatial light modulator 31. Similarly, the controller 4 of the second optical terminal 1b determines an updated spatial pattern based on the sixth spatial mode M6 of the spatially demodulated first light beam B2, the second spatial pattern applied to the second spatial light modulator 31 at the second optical terminal 1b, and the data received from the photodetector 33 about the first spatial pattern applied to the first light beam at the first terminal 1a. The updated spatial pattern is then applied by the controller 4 of the second optical terminal 1b to the first second spatial light modulator 22 and preferably the second spatial light modulator 31.

Such processing is done continuously, in particular until both first and second optical terminals 1a, 1b arrive in obtaining the eigenmode of the turbulent channel 50. In this state, the first, fourth, fifth and eight spatial modes M1, M4, M5, M8 are approximately clean having an M² of about 1 and being approximately diffraction limited and the second, third, sixth and seventh spatial modes M2, M3, M6, M7 are approximately the same and correspond to the eigenmode of the turbulent channel 50. Such a state is shown for the first to eitgth spatial modes M1 to M8 in Fig. 3.

In the embodiment shown in Fig. 3, the transmitting channel 2 of the first optical terminal 1a further comprises a single photon source 23 for emitting a quantum beam Q for quantum communication. In the present embodiment, a difference of a wavelength of the first light beam B1 and the wavelength of the quantum beam Q is between 0.5 nm and 3 nm. In preferred embodiments, the difference in the wavelength is 0.7 nm and 2 nm. The transmitting channel 2 further comprises a coupler 24 for combining the first light beam B1 and the quantum beam Q. This coupler 24 can be a free-space beam combiner, a fiber-based coupler or a waveguide coupler. Downstream the coupler 24, a collimator 26 is arranged to collimate the combined beams B1, Q.

In the embodiment shown in Fig. 3, the receiving channel 3 of the second optical terminal 1b comprises a single photon counter 34 for receiving the quantum beam Q, and a beam splitter 38 arranged upstream the single photon counter 34 for separating the first light beam B1 and the quantum beam Q. In this embodiment, the beam splitter 38 comprises a dense wavelength division multiplexing, DWDM, filter for separating the first light beam from quantum beam Q. In further embodiments, the first light beam B1 and the quantum beam Q have and orthogonal polarization state. The coupler 24 of the first optical terminal is configured as a polarizing coupler and the beam splitter 38 is configured as a polarization beam splitter.

In the transmitting channel 3 of the second optical terminal 1b, the light source 21 is fiber based emitting the second light beam B2 into a fiber. The emitted second light beam B2 is then collimated by a collimator 26 to free space. Furthermore, the transmitting channel 2 and the receiving channel 3 of both first and second optical terminals 1a, 1b each comprise an aperture 51 arranged in the transmitting channel 2 and the receiving channel 3 of the respective optical terminal 1a, 1b. The aperture 51 is configured as a telescope magnifying the transmitted beams B1, B2, Q and demagnifying the received beams B1, B2, Q. A beam separator 52 is arranged to separate the transmitted and received beam B1, B2, Q in the transmitting channel 2 and receiving channel 3 as well. The beam separator 52 can be, for example, a polarizing beam splitter or a dichroic beam splitter, depending on the characteristics of the first and second light beam B1, B2. A first mirror 27 is arranged in the transmitting channel 2 of the second optical terminal to reflect the outgoing second light beam to the beam separator 52. A second mirror 37 is arranged in the receiving channel 3 of the first optical terminal 1a to reflect the second light beam B2 towards the second spatial light modulator 31.

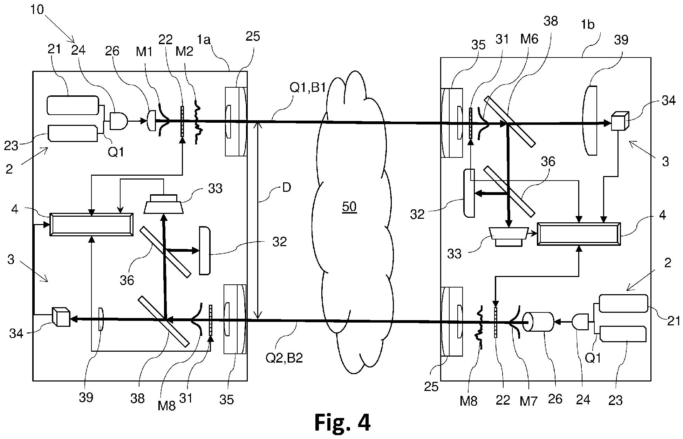

Fig. 4 shows a schematic illustration of an optical system 10 including optical terminals 1a, 1b according to a further embodiment of the invention.

In the embodiment shown in Fig. 4, the transmitting channel 2 of both first and second optical terminals 1a, 1b comprises a single photon source 23 for emitting respective first and second quantum beams Q1, Q2 for quantum communication. The first quantum beam Q1 is transmitted by the single photon source 23 of the first optical terminal 1a and transmitted to the second optical terminal 1b, and the second quantum beam Q2 is transmitted by the single photon source 23 of the second optical terminal 1b and transmitted to the first optical terminal 1a. The transmitting channel 2 of both optical terminals 1a, 1b thus comprise a coupler 24 for combining the first and second light beams B1, B2 with the respective first and second quantum beams Q1, Q2. Consequently, the receiving channel 3 of both optical terminals 1a, 1b thus comprise a beam splitter 38 to discriminate the classical first and second light beams B1, B2 from the respective first and second quantum beams Q1, Q2. Furthermore, the receiving channel 3 of both optical terminals 1a, 1b thus comprise single photon counter 34 for obtaining an electric signal containing data encoded into the first and second quantum beams Q1, Q2.

Furthermore, the first and second optical terminal 1a, 1b each comprise a first aperture 25 arranged in the transmitting channel 2 and a second aperture 35 arranged in the receiving channel 3 and spaced apart from the transmitting channel 2 by a predetermined distance D. This renders the beam separator 52 described in the previous emodiment shown in Fig. 3 redundant. It further at least relaxes the constraints of the beam splitter 38.

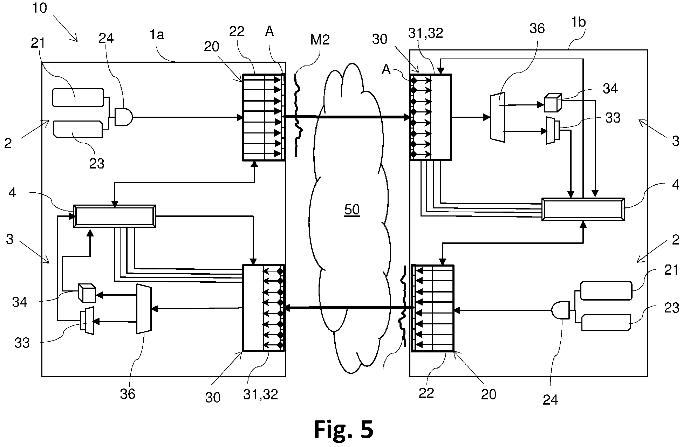

Fig. 5 shows a schematic illustration of an optical system 10 including optical terminals 1a, 1b according to a further embodiment of the invention.

In this embodiment of the optical system 10, the light beams B1, B2 and quantum beams Q1, Q2 are combined by the coupler 24 and directed to a first photonic chip 20 on the transmitting channel 2. The first photonic chip 20 is configured to split the respective light beams B1, B2 and quantum beams Q1, Q2 onto a plurality of waveguides, with different amplitudes and phases. The amplitude and phases are controlled by the controller 4. After some iterations, the amplitude and phases are set in such a way to match one of the eigenmodes of the turbulent channel 50. The so phase and amplitude modulated beams B1, B2, Q1, Q2 in the waveguides on the first photonic chips 20 are then coupled to free space by a photonic pased array, which contains an array of optical antenna elements A, thus carrying the eigenmode of the turbulent channel 50. In this way, the first spatial light modulator 22 of the transmitting channels 2 of each of the first and second optical terminals 1a, 1b is configured as a photonic phased array comprising a plurality of the optical antenna elements A. The photonics chips 20 thus function as the final aperture of the respective optical terminal 1a, 1b for transmitting and receiving the respective light beam B1, B2.

At the receiving channel 3 of the each of the first and second optical terminal 1a, 1b, a corresponding second photonic chip 30 containing a phase-sensitive photonic phased array with a plurality of optical antenna elements A receive the light beams B1, B2 and quantum beams Q1, Q2. The phases and/or amplitudes of the light coming from all antenna elements A, which preferably are nano-antennas, are measured by by the detector 32, which is implemented on the second photonic chip 30. The detector 32 taps a small part of the signals by means of waveguide couplers. The combined output from the photonic chip 30 contains both the classical light beams B1, B2 and the quantum beams Q1, Q2, which are separated by separating elements (not shown such) similar to a DWDM filter on the second photonic chip 30.

The second spatial light modulator 31 and the detector 32 of the receiving channel 3 are thus implemented on the second photonic chip 30 in each receiving channel 3 of the first and second optical terminals 1a, 1b. The second spatial light modulator 31 is thus configured as a phase-sensitive phased array comprising a plurality of optical antenna elements A.

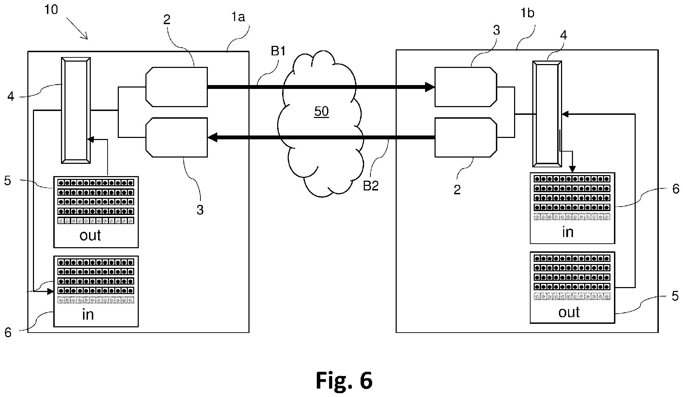

Fig. 6 shows a schematic illustration of an optical system 10 including optical terminals 1a, 1b according to a further embodiment of the invention.

In Fig. 6, an embodiment of the proposed method for free space optical communication to characterize and use the eigenmodes of the atmospheric channel using the optical system 10 as described above with reference to Fig. 2 to 5 will be described in more detail.

In Fig. 6, only the essential elements are shown for better clarity. In particular, the the optical elements such as the coupler 24, beam-splitters 36, 38, apertures 25, 35, 51 or telescopes, etc., are conceptually summarized as a the transmitting channel 2 and the receiving channel 3, as e.g. arranged on an optical bench. Although shown as two separated optical benches, it is understood that these two optical benches can be combined as a single unit, with a single aperture, as shown for example in Fig. 3

An output buffer 5 configured as a volatile or non-volatile memory contains a sequence of phase and/or amplitude patterns that, during operation, encode one or more eigenmodes of the atmospheric turbulent channel 50. These patterns are read out by the controller 4 and then programmed in the spatial light modulator 22 or into the photonic chips 20 of the transmitting channel 2.

Their patterns are also encoded using a modulator as data and sent via the same light beam B1, B2. Therefore the light beams B1, B2 contain the pattern twice, first, as a spatial modulation of its phase and amplitude spatial profile, and second, encoded as a data stream. In general the data-stream can also contain other forms of data, intercalated together with the spatial pattern data. As described above, at the start of the communication session eigenmodes of the atmospheric turbulent channel 50 are not yet known, so these spatial patterns are a predefined sequence, either taken from a previous communication session or a sequence of free-space modes, like for example Laguerre Gaussian Modes. These patterns are sent out quickly as a sequence, e.g. 10 spatial patterns for 10 microseconds each for a total duration of 10 microseconds.

The receiving terminal 1a, 1b analyzes the spatial modes of the received light beam B1, B2. Two types of data are retrieved: the spatial amplitude and spatial phase patterns, which have been potentially modulated by the effect of the atmospheric turbulent channel 50, and the original patterns which have been transmitted in the data stream. The retrieved patterns are stored in an input buffer 6 configured as a volatile or non-volatile memory. By analyzing the received original and modulated patterns, the controller 4 solves an eigenmode problem numerically, and estimates the eigenmodes of the atmospheric turbulent channel 50. These eigenmodes are then used to modulate the outgoing optical beam, via the first spatial light modulator 22, which may be configured as an optical or photonic phased array on the first photonic chip 20.

In the above embodiments, the propagation time of the light through the atmosphere and the processing time of the controller 4 can be both shorter than the coherence time of the atmospheric turbulence. The turbulence appears thus frozen, and the same pattern can effectively be used for the forward and reverse paths. Furthermore, by analyzing the stack of the last received patterns, an algorithm or a neural network could be used to predict the eigenmode for the next time step.

When the second optical terminal 1b sends the second light beam B2 back to the first optical terminal 1a, it can encode in the data stream both the pattern that it received and the pattern that it is sending. In this way, in the next step, the first optical terminal 1a will have three informations: 1 the pattern it originally sent, 2 the spatial pattern as received by the second terminal, 3 the spatial pattern that the second optical terminal 1b has sent back and which should be a more accurate estimate of the atmospheric eigenmode. This will allow the first optical terminal 1a to generate a further improved estimate of the eigenmode of the atmospheric channel. If the process is fast enough it is be able to track the constantly changing atmospheric eigenmodes. For applications in quantum communications, both the classical and the quantum optical beams are modulated with the same spatial pattern.

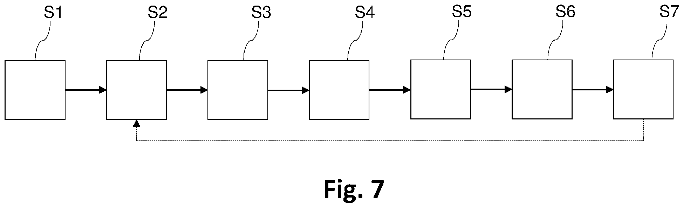

Fig. 7 shows a flow chart for a method for quantum communication according to an embodiment of the invention.

The method for free-space optical communication. The method in particular uses an optical system 10 as described above with reference ro Fig. 2 to 6.. The method comprises the steps of emitting S1 a first light beam B1 by a light source 21 of a first optical terminal 1a. The first light beam B1 is spatially modulated S2 by a first spatial light modulator 22 of the first optical terminal 1a with a predetermined first spatial pattern. The first light beam B1 is then transmitted S3 through a turbulent channel towards a second optical terminal 1b. At the second optical terminal 1b, the the first light beam B1 is spatially demodulated S4 by a second spatial light modulator 31 of the second optical terminal 1b by an applied predetermined second spatial pattern. A detector 32 then detects S5 a spatial mode M2 of the first light beam B1. A controller 4 determines S6 a updated spatial pattern based on the detected spatial mode M2 and the second spatial pattern. This updated spatial pattern is obtained by solving numerically an eigenvalues problem of a communication, the first light beam propagated through. A first spatial light modulator 22 of the second optical terminal 1b then applies S7 the updated spatial pattern to a second light beam B2 emitted by a light source 21 of the second optical terminal 1b. The controller 4 of the second optical terminal 1b may also apply the updated spatial pattern to the first spatial light modulator 22 of the second optical terminal 1b in order to increase the accuracy of the spatial demodulation of the distorted first light beam when arriving at the second optical terminal.

It is understood that in a next step at the first optical terminal, the second light beam is spatially demodulated by the second spatial light modulator 31 and an updated spatial pattern is determined by the controller 4 based on the detected spatial mode M4 of the second light beam by solving an eigenvalue problem numerically. The first light beam then is spatially modulated by the updated spatial pattern applied to the first spatial light modulator 22, thereby returning to step S2, as indicated in Fig. 7 by the dashed line.

Furthermore, it is understood that this iteration is performed to further approximate and eventually obtain a spatial pattern that corresponds to the eigenmode of the turbulent channel 50.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present inventions is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiments. In addition, in this disclosure, the terms "comprise" or "comprising" do not exclude other elements or steps, the terms "a" or "one" do not exclude a plural number, and the term "or" means either or both. Furthermore, characteristics or steps, which have been described may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1, 1a, 1b: optical terminal
- 2: transmitting channel
- 3: receiving channel
- 4: controller
- 5: output buffer
- 6: input buffer
- 10: optical system
- 20: first photonic chip
- 21: light source
- 22: first spatial light modulator
- 23: single photon source
- 24: coupler
- 25: first aperture/ telescope
- 26: collimator
- 27: first mirror
- 30: second photonic chip
- 31: second spatial light modulator
- 32: detector
- 33: photodetector
- 34: single photon counter
- 35: second aperture/ telescope
- 36: non-polarizing beam splitter
- 37: second mirror
- 38: beam splitter
- 39: lens
- 50: turbulent channel
- 51: common aperture/ telescope
- 52: beam separator
- A: optical antenna element
- B1: first light beam
- B2: second light beam
- QB: quantum beam
- Q1: first quantum beam
- Q2: second quantum beam
- M1-M8: first to eight spatial mode

## Claims

1. Optical terminal (1, 1a, 1b) for free-space optical communication, comprising
a transmitting channel (2) comprising
a light source (21) for emitting a first light beam (B1), and
a first spatial light modulator (22) for spatially modulating the first light beam (B1) by a predetermined first spatial pattern; and
a receiving channel (3) comprising
a second spatial light modulator (31) for spatially demodulating a received
second light beam (B2) by a predetermined second spatial pattern, and
a detector (32) for detecting a spatial mode (M4) of the spatially demodulated second light beam (B2); and
a controller (4) configured to
determine a updated spatial pattern based on the spatial mode (M4) of the second light beam (B2) and the second spatial pattern, and
apply the updated spatial pattern to the first and second spatial light modulators (22, 31).

2. Optical terminal (1, 1a, 1b) according to claim 1, wherein the detector (32) comprises a wavefront sensor configured to detect an amplitude distribution and a phase distribution of the second light beam (B2).

3. Optical terminal (1, 1a, 1b) according to claim 1 or 2, wherein the controller (4) is configured to determine an eigenvalue of a turbulent channel (50) between the optical terminal (1, 1a) and a second optical terminal (1b) transmitting the second light beam (B2) based on the first and second spatial pattern and the detected spatial mode (M4) of the spatially demodulated second light beam (B2).

4. Optical terminal (1, 1a, 1b) according to any of the previous claims, wherein the transmitting channel (2) comprises a modulator for modulating the first light beam (B1) such as to contain data about the first spatial pattern.

5. Optical terminal (1, 1a, 1b) according to any of the previous claims, wherein the receiving channel (3) further comprises a photodetector (33) for receiving the second light beam (B2), wherein the controller (4) is configured to
demodulate an electric signal of the photodetector (33) to obtain data about a third spatial pattern applied to the second light beam (B2), and determine the updated spatial pattern based on the spatial mode of the second light beam (B2), the second spatial pattern, and the third spatial pattern.

6. Optical terminal (1, 1a, 1b) according to any of the previous claims, wherein the transmitting channel (2) further comprises a single photon source (23) for emitting a quantum beam (QB) for quantum communication.

7. Optical terminal (1, 1a, 1b) according to claim 6, wherein a difference of a wavelength of the first light beam (B1) and the wavelength of the quantum beam (QB) is between 0.5 nm and 3 nm, preferably 0.7 nm and 2 nm, the transmitting channel (2) further comprising a coupler (24) for combining the first light beam (B1) and the quantum beam (Q).

8. Optical terminal (1, 1a, 1b) according to any of the previous claims, wherein the receiving channel (3) further comprises a single photon counter (34) for receiving a quantum beam (Q), and a beam splitter (38) for separating the second light beam (B2) and the quantum beam (Q).

9. Optical terminal (1, 1a, 1b) according to claim 8, wherein the beam splitter (38) comprises a dense wavelength division multiplexing, DWDM, filter or a polarization beam splitter.

10. Optical terminal according to any of the previous claims, further comprising an aperture (51) arranged in the transmitting channel (2) and the receiving channel (3).

11. Optical terminal (1, 1a, 1b) according to any of claims 1 to 9, further comprising a first aperture (25) arranged in the transmitting channel (2) and a second aperture (35) arranged in the receiving channel (3) and spaced apart from the transmitting channel (2) by a predetermined distance (D).

12. Optical terminal (1, 1a, 1b) according to any of the previous claims, wherein the first spatial light modulator (22) is configured as a photonic phased array comprising a plurality of optical antenna elements (A), in particular arranged on a first photonic chip (20) of the transmitting channel (2).

13. Optical terminal (1, 1a, 1b) according to any of the previous claims, wherein the second spatial light modulator (31) is configured as a phase-sensitive photonic array comprising a plurality of optical antenna elements (A), in particular arranged on a second photonic chip (30) of the receiving channel (3).

14. Optical system (10) for free-space optical communication, comprising a first optical terminal (1a) according to any of the previous claims as a first communication terminal, and a second optical terminal (1b) according to any of the previous claims as a second communication terminal,
wherein the receiving channel (3) of the second optical terminal (1b) is configured to:
receive the emitted first light beam from the first optical terminal (1a),
spatially demodulate the first light beam with a predetermined second spatial pattern applied to the second spatial light modulator (31) of the second optical terminal (1b), and
detect a first spatial mode by the detector (32) of the second optical terminal (1b);
wherein the controller (4) of the second optical terminal (1b) is configured to:
determine a updated spatial pattern corresponding to an eigenmode of a turbulent channel (50) between the first and second optical terminal (1a, 1b) based on the detected spatial mode (M4) of the first light beam (B1) and the second spatial pattern, and
apply the updated spatial pattern to the first and second spatial light modulators (22, 31) of the second optical terminal (1b).

15. Method for free-space optical communication, in particular using an optical system (10) according to claim 14, comprising
emitting (S1), by a light source (21) of a first optical terminal (1a), a first light beam (B1),
spatially modulating (S2), by a first spatial light modulator (22) of the first optical terminal (1a), the first light beam (B1) with a predetermined first spatial pattern, transmitting (S3) the first light beam (B1) through a turbulent channel (50) towards a second optical terminal (1b),
spatially demodulating (S4), by a second spatial light modulator (31) of the second optical terminal (1b), the first light beam (B1) by applying a predetermined second spatial pattern,
detecting (S5), by a detector (32), a spatial mode (M4) of the first light beam (B1), determining (S6) a updated spatial pattern based on the detected spatial mode (M4) and the second spatial pattern, and
applying (S7), by a first spatial light modulator (22) of the second optical terminal (1b), the updated spatial pattern to a second light beam (B2) emitted by a light source (21) of the second optical terminal (1b).
